# EUROPÄISCHE PATENTANMELDUNG

(11) **EP 0 602 348 A1**
(43) Veröffentlichungstag der Anmeldung: **22.06.1994**
(21) Anmeldenummer: 93116945.2
(22) Anmeldetag: 20.10.1993
(51) Int. Cl.: F02B 29/04

(54) **Verfahren zur Regelung der Ladelufttemperatur, sowie Vorrichtung zu dessen Durchführung**

(30) Priorität: 12.12.1992 DE 4242010
(71) Anmelder: MAN NUTZFAHRZEUGE AG, 80995 München (DE)
(72) Erfinder: D'Alfonso, Nunzio, Dr.-Ing., D-90441 Nürnberg (DE)

(57) **Zusammenfassung**

Die Erfindung bezieht sich auf ein Verfahren zur Regelung der Ladelufttemperatur. Die Regelung der Ladelufttemperatur erfolgt nach dem Stand der Technik mittels eines Thermostat. Eine derartige Regelung hat den Nachteil, daß, bedingt durch die Trägheit des Thermostat, die Ladelufttemperatur nur mit zeitlicher Verzögerung reguliert werden werden kann. Erfindungsgemäß wird demgegenüber vorgeschlagen die Regelung der Ladelufttemperatur primär durch einen Drucksensor 13 und erst sekundär durch einen Thermostat 12 zu bewerkstelligen, wobei der Drucksensor 13 das Stellglied 11 betätigt, um die Ladeluft wahlweise über einen Ladeluftkühler 7 zu führen, oder sie direkt einem Luftsammelrohr 9 zuzuführen. Der Drucksensor 13 wird unmittelbar vom Druck hinter dem Verdichter 3 beaufschlagt. Das erfindungsgemäße Verfahren hat den Vorteil, daß der Druck der Ladeluft durch den Drucksensor 13 verzögerungfrei erfaßt werden kann und folglich auch das Stellglied 11 verzögerungsfrei reagiert. Das erfindungsgemäße Verfahren macht davon Gebrauch, daß die Ladelufttemperatur durch die polytrope Zustandsänderung eine Funktion des Druckes ist. Durch das erfindungsgemäße Verfahren setzt die Kühlung der Ladeluft beim Hochfahren der Brennkraftmaschine früher ein, so daß die Höchstleistung schneller erreicht wird.

## Beschreibung

Die Erfindung bezieht sich auf ein Verfahren gemäß dem Gattungsbegriff des Patentanspruches 1.

Aus DE-PS 32 14 205 ist eine Brennkraftmaschine mit Regelung der Ladelufttemperatur bekannt, bei der die Ladeluft nach einem Verdichter des Abgasturboladers durch ein Stellglied gesteuert entweder unter Zwischenschaltung eines Vorwärmers, oder eines Ladeluftkühlers dem Luftsammelrohr zugeführt wird. Der Weg der Ladeluft wird dabei durch ein temperaturabhängiges Stellglied gesteuert, welches am Eingang des Luftsammelrohrs angeordnet ist. Die temperaturabhängige Steuerung des Stellgliedes wird dabei durch eine Bimetallfeder bewerkstelligt. Wenn die vom Verdichter kommende Ladeluft zu kalt ist stellt die Bimetallfeder eine Klappe des Stellgliedes so, daß der Ausgang des Ladeluftkühlers versperrt wird, wodurch die Ladeluft über einen Vorwärmer geführt wird. Wenn eine ausreichende Temperatur für Ladeluft erreicht ist schaltet die Bimetallfeder die Klappe des Stellgliedes derart um, daß der Ausgang des Vorwärmers versperrt wird, so daß die Ladeluft über den Ladeluftkühler geführt wird. Da die Steuerung der Klappe durch die als Thermostat fungierende Bimetallfeder erfolgt reagiert die Umsteuerung mit hoher zeitlicher Verzögerung, da die Bimetallfeder wie auch andere handelsübliche Thermostate eine relativ hohe Wärmeträgheit aufweisen und daher erst mit zeitlicher Verzögerung ansprechen.

Ausgehend von einer Vorrichtung gemäß dem Gattungsbegriff liegt der Erfindung die Aufgabe zugrunde ein Verfahren zu entwickeln, welches es gestattet, möglichst schnell die gewünschte Ladelufttemperatur zu erreichen, ohne daß dabei im höheren Lastbereich die Kühlung der Ladeluft verspätet einsetzt.

Diese Aufgabe wird erfindungsgemäß durch die Merkmale des Patentanspruches 1 gelöst.

Dadurch, daß das Stellglied von einem Drucksensor angesteuert wird ergibt sich ein wesentlich schnelleres Ansprechen des Umsteuerungsmechanismus. Der Drucksensor folgt nahezu verzögerungsfrei dem Druckanstieg bzw. Druckabfall der Ladeluft, d. h. der physikalisch durch polytrope Verdichtung mit der Druckänderung einhergehenden Temperaturänderung.

Eine Weiterbildung des Verfahrens nach Anpsruch 1 ist dem Anspruch 2 zu entnehmen.

Bei höheren Anforderungen an die Konstanz der Ladelufttemperatur kann der Drucksensor funktionell derart mit einem auf die Umgebungstemperatur reagierenden Thermostat gekoppelt werden, daß auch die zeitlich gesehen geringen Temperaturschwankungen der Umgebung berücksichtigt werden. Der den Drucksensor sekundär beeinflußende Thermostat reagiert lediglich auf die Temperatur in der Ansaugleitung, also eigentlich auf die herrschende Umgebungstemperatur, die sich zeitlich gesehen nur sehr langsam ändert, auf jeden Fall wesentlich langsamer als die Ladelufttemperatur hinter dem Verdichter im instationären Motorbetrieb.

Eine Vorrichtung zur Durchführung des Verfahrens nach den Patentansprüchen 1 und 2 kann dem Patentanspruch 3 entnommen werden.

Der Drucksensor wird über eine Leitung mit der Druckleitung verbunden, wobei die Leitung zwischen Verdichter und Stellglied abzweigt und der Drucksensor löst durch den Druckanstieg nach dem Verdichter primär die Betätigung des Stellgliedes aus. Sekundär wirkt die Außentemperatur über die temperaturgeregelte Vorspannkraft der Feder auf den Drucksensor ein.

Weitere vorteilhafte Ausführungen der Vorrichtung sind den Unteransprüchen 4 und 5 zu entnehmen.

Ausführungsbeispiele für Vorrichtungen zur Durchführung des Verfahrens sind in Zeichnungen dargestellt. Es zeigt:
- Figur 1: ein Schaltschema für die Regelung der Ladelufttemperatur
- Figur 2: eine Vorrichtung zur Regelung der Ladelufttemperatur, wobei der Drucksensor sekundär von einem Thermostat beeinflußt wird
- Figur 3: ein vom Thermostat geregeltes Modulierventil zur Beeinflussung des Drucksensors

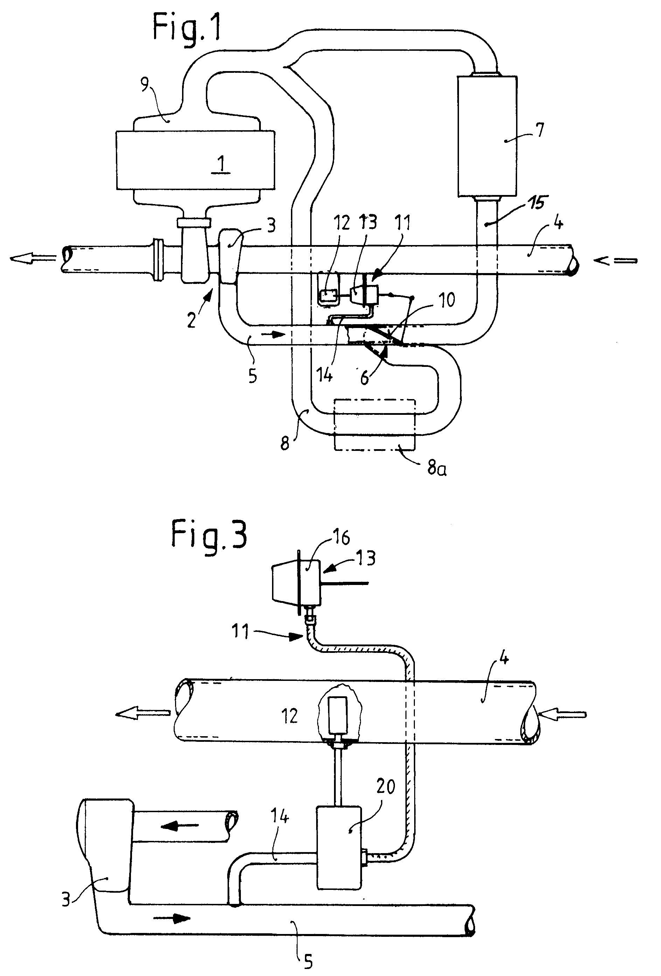

Ein Schaltscheme zur Durchführung des erfindungsgemäßen Verfahrens ist aus Figur 1 zu ersehen. Eine Brennkraftmaschine 1 wird mittels eines Abgasturboladers 2 aufgeladen. Der Verdichter 3 des Abgasturboladers saugt über eine Ansaugleitung 4 Luft aus der Umgebung an und drückt sie in eine Druckleitung 5, welche über ein Regelventil 6 entweder in einen Ladeluftkühler 7, oder eine Umgehungsleitung 8 mündet. In die Umgehungsleitung 8 kann noch ein Luftvorwärmer 8a eingeschaltet werden. Der Ladeluftkühler 7 und die Umgehungsleitung 8 münden gemeinsam in ein Luftsammelrohr 9 der Brennkraftmaschine 1.

Das Regelventil 6 weist eine Klappe 10 auf, welche von einem Stellglied 11 betätigt wird. Das Stellglied 11 wiederum besteht aus einem Thermostat 12 und einem Drucksensor 13 wobei der Thermostat 12 die Temperatur der Ansaugluft in der Ansaugleitung 4 erfaßt. Der Drucksensor 13 kommuniziert über Leitung 14 mit der Druckleitung 5 und schaltet nach dem Überschreiten eines festgelegten Druckniveaus die Klappe 10 aus der gezeichneten Stellung heraus derart um, daß die zunächst über die Umgehungsleitung 8, oder einen in die Umgehungsleitung 8 eingebauten Luftvorwärmer 8a geführte Luft nach dem Erreichen eines vorgegebenen Druckniveaus über eine Ladeluftleitung 15 den Ladeluftkühler 7 passieren muß. Erfindungsgemäß wird der Drucksensor 13 über die Temperatur der Ansaugluft derart vom Thermostat 12 beeinflußt, daß das zur Betätigung der Klappe 10 vorgegebene Druckniveau bei niedriger Temperatur der Luft in der Ansaugleitung 4 höher angesetzt wird, als dies bei höherer Temperatur der Luft in der Ansaugleitung 4 der Fall ist, d. h., daß der Drucksensor 13 bei niedriger Temperatur der Ansaugluft erst bei einem höheren Druckniveau anspricht, als dies bei höherer Temperatur der Ansaugluft der Fall ist.

Dem erfindungsgemäßen Verfahren liegt die Erkenntnis zugrunde, daß die Temperaturdifferenz zwischen der Luft in der Ansaugleitung 4 und der Druckleitung 5 durch deren Druckdifferenz in Form einer polytropen Zustandsänderung beschrieben werden kann. Der besondere Vorteil des erfindungsgemäßen Verfahrens ist darin zu sehen, daß der Drucksensor 13 des Stellgliedes 11 sehr viel schneller anspricht, als dies ein Thermostat leisten könnte. Der Thermostat 12 hat lediglich die Aufgabe den Ansprechdruck des Drucksensors 13 in Abhängigkeit von der Umgebungstemperatur zu variieren. Die nach wie vor vorhandene Trägheit des Thermostat 12 ist unbedeutend, da sich die Temperatur der Luft in der Ansaugletiung 4 in Abhängigkeit von der Umgebungstemperatur zeitlich gesehen nur sehr langsam ändert. Die Betätigugn der Klappe 10 kann durch den Drucksensor 13 nahezu verzögerungsfrei erfolgen.

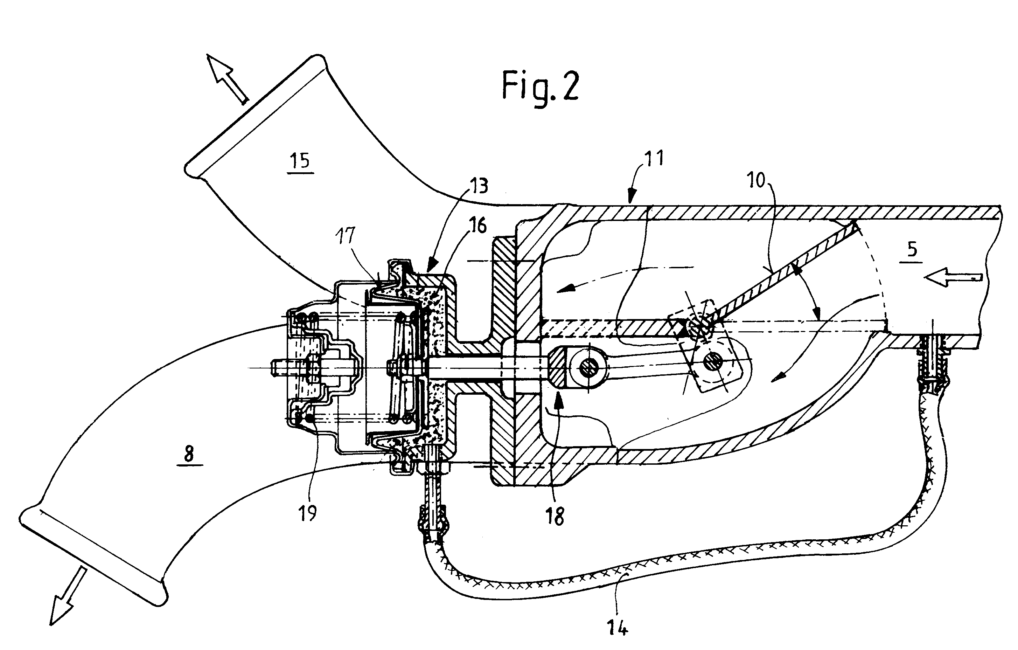

Ein Ausführungsbeispiel des Stellgliedes 11 ist in Figur 2 dargestellt. Die Klappe 10 verbindet die Druckleitung 5 entweder mit der Umgehungsleitung 8, oder nach dem Umschalten aus der gezeichneten Stellung mit einer Ladeluftleitung 15, welche zum Ladeluftkühler 7 führt (Figur 1). Die Betätigung der Klappe 10 erfolgt erfindungsgemäß primär durch den Drucksensor 13. Ein Druckraum 16 des Drucksensors 13 kommuniziert über die Leitung 14 mit der Druckleitung 5. Nach dem Erreichen eines vorgegebenen Druckes in der Druckleitung 5 kann durch eine Membran 17 und ein Gestänge 18 die Umsteuerung der Klappe 10 aus der gezeichneten Stellung heraus erfolgen. Eine zusätzliche von der Saugtemperatur abhängige Regulierung des Öffnungspunktes des Stellgliedes 11 wird durch die Änderung des Ansprechdruckes einer Druckfeder 19 im Drucksensor 13 bewerkstelligt, wobei die Druckfeder 19 von der Saugluft beaufschlagt wird und die Funktion des in Figur 1 dargestellten Thermostat 12 übernimmt, welcher von der Saugluft in der Ansaugleitung 4 beaufschlagt wird. Bei niedriger Temperatur der Ansaugluft besitzt die Druckfeder 19 eine höhere Vorspannkraft und die Membran 17 betätigt das Gestänge 18 zur Umsteuerung der Klappe 10 erst bei höherem Druck. Als Folge des höheren Druckgefälles erhöht sich das Temperaturgefälle und die Temperatur der Luft erreicht nach dem Verdichter 5 auch bei niedriger Umgebungstemperatur vor dem Umschalten der Klappe 10 wieder das gewünschte Temperaturniveau.

Es ist leicht einzusehen, daß die Ansprechzeit des Drucksensors 13 sehr viel kleiner ist, als die Ansprechzeit eines Thermostat, der immer eine gewisse thermische Trägheit besitzt. Da sich aber die Außentemperatur nur sehr langsam verändert hat die Druckfeder 19 genügend Zeit sich auf veränderte Randbedingungen einzustellen.

Werden an die Konstanz der Ladeluft geringere Anforderungen gestellt, so kann der auf die Umgebungstemperatur reagierende Thermostat 12 entfallen. Die Temperatur der Ladeluft wird dann nur über den Drucksensor 13 als Funktion einer polytropen Zustandsänderung geregelt.

Eine Variation des Stellgliedes 11 ist schematisch in Figur 3 dargestellt. Der Ansprechdruck des Drucksensors 13 wird mit Hilfe eines Modulierventils 20 derart variiert, daß der Druck im Druckraum 16 des Drucksensors 13 angehoben wird, wenn die Temperatur der Ansaugluft in der Ansaugleitung 4 absinkt, bzw. umgekehrt. Das Modulierventil 20 wird zu diesem Zweck vom Thermostat 12 angesteuert der in die Ansaugleitung 4 eingebaut ist. Der Druck im Druckraum 16 des Drucksensors 13 kann also ausgehend vom Druck in der Druckleitung 12 als Funktion der Temperatur in der Ansaugleitung 4 mittels des Modulierventils 20 variiert werden.

Ebenso wie bei der Vorrichtung nach Figur 2 kann auch hier der Thermostat 12 mit dem Modulierventil entfallen wenn die Anforderungen an die Konstanz der Ladelufttemperatur gesenkt werden und Wert auf einfache Ausführung gelegt wird.

Eine weitere Möglichkeit der Betätigung des Stellgliedes 11 besteht darin, daß der Druck in der Druckleitung 5 und die Temperatur in der Ansaugleitung 4 mittels Sensoren erfaßt wird und die Werte dieser Sensoren einer Elektronik zur Auswertung zugeführt werden, wobei die Elektronik die Befehle zur Steuerung der Klappe 10 (Figur 1) erteilt. Der Vorteil einer derartigen Einrichtung besteht wiederum darin, daß der den Druckwert erfassende Sensor trägheitsfrei anspricht und eine nahezu verzögerungsfreie Steuerung der Klappe 10 ermöglicht.

## Patentansprüche

1. Verfahren zur Regelung der Ladelufttemperatur, bei dem die Ladeluft mittels eines Stellgliedes nach dem Verlassen eines Verdichters vor dem Erreichen einer vorgegebenen Temperatur über eine Umgehungsleitung oder einen Luftvorwärmer einem Luftsammelrohr zugeführt wird und nach dem Erreichen der vorgegebenen Temperatur durch Umschaltung des Stellgliedes über einen Ladeluftkühler dem Sammelrohr zugeführt wird, dadurch gekennzeichnet, daß das Stellglied (11) durch einen Drucksensor (13) aktivierbar ist, und daß der Drucksensor (13) vom Druck in einer dem Verdichter (3) nachgeschalteten Druckleitung (5) beaufschlagt wird.

2. Verfahren nach Anspruch 1, dadurch gekennzeichnet, daß das Stellglied (11) neben dem Drucksensor (13) sekundär von einem Thermostat (12) angesteuert wird, wobei der Thermostat (12) von der Ansaugluft beaufschlagt wird, und daß der Drucksensor (13) und der Thermostat (12) derart zusammenwirken, daß der Ansprechdruck des Drucksensors (13) um so höher ist, je geringer die Temperatur der Ansaugluft ist.

3. Vorrichtung zur Durchführung des Verfahrens nach Anspruch 2, dadurch gekennzeichnet, daß der Drucksensor (13) des Stellgliedes (11) aus einem Druckraum (16) und einer Membran (17) gebildet wird, daß der Druckraum (16) über Leitung (14) mit der Druckleitung (5) kommuniziert, daß die Membran mittels einer Druckfeder (19) vorbelastet ist, wobei die Druckfeder (19) in ihrer Vorspannung temperaturabhängig ist und zwar derart, daß die Vorspannung der von der Ansaugluft umspülten Druckfeder (19) mit sinkender Temperatur der Ansaugluft ansteigt, bzw. umgekehrt, daß die Membran (17) über ein Gestänge (18) mit einer schwenkbaren Klappe (10) verbunden ist, welche die Druckleitung (5) bis zum Erreichen eines vorgegebenen Druckes mit der Umgehungsleitung (8) oder einem Luftvorwärmer (8a) und nach dem Erreichen eines vorgegebenen Druckes mit der zum Ladeluftkühler führenden Ladeluftleitung (15) verbindet (Figur 2).

4. Vorrichtung nach Anspruch 3, dadurch gekennzeichnet, daß der Druckraum (16) des Drucksensors (13) unter Zwischenschaltung eines Modulierventils (20) über Leitung (14) mit der vom Verdichter (3) kommenden Druckleitung (5) in Verbindung steht, und daß das Modulierventil (20) vom Thermostat (12) ansteuerbar ist, wobei der Thermostat (12) in die Ansaugleitung (4) eingebaut ist (Figur 3).

5. Vorrichtung nach Anspruch 3, dadurch gekennzeichnet, daß das Stellglied (11) durch eine Elektronik ansteuerbar ist, daß dabei ein Drucksensor in die Druckleitung (5) und ein Temperatursensor in die Ansaugleitung (4) eingebaut ist, daß die Signale beider Sensoren in der Elektronik ausgewertet werden, und daß dabei das Signal des Drucksensors primär ausgewertet wird und das Signal des Temperatursensors sekundär zur Korrektur des Drucksignals ausgewertet wird.
